# FASCICULE DE BREVET EUROPEEN

(11) **EP 1 396 477 B1**
(45) Date de publication et mention de la délivrance du brevet: **07.06.2006**
(21) Numéro de dépôt: 03292019.1
(22) Date de dépôt: 12.08.2003
(51) Int. Cl.: C03B 37/03

(54) **Dispositif pour diminuer la dispersion modale de polarisation d'une fibre optique lors du fibrage**
Vorrichtung zum Verringern der Polarisationsmodendispersion einer optischen Faser während des Ziehens
Apparatus for reducing the polarisation mode dispersion of an optical fibre during drawing

(30) Priorité: 09.09.2002 FR 0211128
(43) Date de publication de la demande: 10.03.2004
(73) Titulaire: Draka Comteq B.V., 1018 TX Amsterdam (NL)
(72) Inventeur: Lainet, Eric, 78600 Maisons Lafitte (FR); Dougdag, Kamel, 78570 Andresy (FR); Bourhis, Jean-François, 95150 Taverny (FR)
(74) Mandataire: Blokland, Arie

(56) Documents cités:
- EP-A- 0 744 636
- US-B1- 6 324 872
- PATENT ABSTRACTS OF JAPAN vol. 018, no. 625 (C-1279), 29 novembre 1994 (1994-11-29) -& JP 06 239642 A (FUJIKURA LTD), 30 août 1994 (1994-08-30)
- PATENT ABSTRACTS OF JAPAN vol. 2000, no. 19, 5 juin 2001 (2001-06-05) -& JP 2001 048568 A (FUJIKURA LTD), 20 février 2001 (2001-02-20)
- PATENT ABSTRACTS OF JAPAN vol. 2000, no. 15, 6 avril 2001 (2001-04-06) -& JP 2000 344539 A (FUJIKURA LTD), 12 décembre 2000 (2000-12-12)
- PATENT ABSTRACTS OF JAPAN vol. 2002, no. 02, 2 avril 2002 (2002-04-02) -& JP 2001 302272 A (FUJIKURA LTD), 31 octobre 2001 (2001-10-31)

## Description

L'invention concerne le domaine des dispositifs anti-PMD dont le but est de diminuer la PMD d'une fibre optique lors du procédé de fibrage. La PMD est la dispersion modale de polarisation (« polarization modal dispersion » en terminologie anglo-saxonne). La dispersion modale de polarisation est un inconvénient pour la fibre optique entraîne une dégradation du signal se propageant dans la fibre optique. Cet inconvénient prend de plus en plus d'importance au furet à mesure que les débits dans les réseaux de communication à fibres optiques augmentent.

Selon un art antérieur, il est connu d'utiliser un dispositif anti-PMD appelé système SZ. Ce système est basé sur l'utilisation d'une poulie plate oscillante en rotation. Ce système est par exemple décrit dans le brevet européen EP 582405 incorporé ici par référence, ou encore dans le brevet européen EP 744636. Le système SZ comprend une poulie plate. Une poulie plate est une poulie dont la surface extérieure périphérique est cylindrique. Le dispositif SZ est positionné à la base de la tour de fibrage, dans le plan de passage de la fibre optique laquelle fibre optique fait un coude au niveau de la poulie plate. Le plan de passage de la fibre optique est aussi appelé plan de fibrage. La poulie plate, en rotation autour de son axe de rotation, oscille également autour de l'axe vertical de fibrage lequel axe est son axe d'oscillation, et symétriquement par rapport au plan de fibrage. Des poulie en V situées avant la poulie plate oscillante et des doigts de guidage situés après la poulie plate oscillante permettent de guider la fibre optique dans le plan de fibrage. Les oscillations de la poulie, alternativement de droite à gauche puis de gauche droite, appliquent un couple de torsion sur la fibre optique qui est déjà recouverte de son revêtement secondaire. Un inconvénient de cet art antérieur est d'aboutir à des fibres optiques dont la PMD reste encore trop élevée.

L'invention propose un dispositif anti-PMD amélioré permettant de réduire davantage la PMD des fibres optiques lors du fibrage desdites fibres optiques. Pour cela, l'invention propose un système anti-PMD basé sur l'utilisation d'une poulie oscillante en rotation qui soit convexe de manière à augmenter le rapport entre d'une part l'angle entre la fibre optique en contact avec la poulie et la perpendiculaire à l'axe de rotation et à l'axe d'oscillation de la poulie et d'autre part l'angle entre le plan de fibrage de la fibre optique et la perpendiculaire à l'axe de rotation et à l'axe d'oscillation de la poulie de façon à augmenter le couple de torsion appliqué à la fibre optique de manière à diminuer la PMD de la fibre optique. En effet, lorsque le rapport entre d'une part l'angle entre la fibre optique en contact avec la poulie et la perpendiculaire à l'axe de rotation et à l'axe d'oscillation de la poulie et d'autre part l'angle entre le plan de fibrage de la fibre optique et la perpendiculaire à l'axe de rotation et à l'axe d'oscillation de la poulie augmente, cela signifie qu'à amplitude d'oscillation donnée de la poulie, l'angle entre la fibre optique en contact avec la poulie et la perpendiculaire à l'axe de rotation et à l'axe d'oscillation de la poulie augmente ce qui fait tourner davantage la fibre optique sur elle-même augmentant ainsi le couple de torsion appliqué à la fibre optique.

Selon l'invention, il est prévu un dispositif anti-PMD comprenant une poulie oscillante en rotation, la poulie appliquant, lors du fibrage d'une fibre optique, alternativement dans le sens des aiguilles d'une montre et dans le sens inverse à celui des aiguilles d'une montre, un couple de torsion à la fibre optique de manière à diminuer sa PMD, caractérisé en ce qu'au moins la partie de la surface extérieure de la poulie destinée à être en contact avec la fibre optique pendant le fibrage est convexe.

L'objet de l'invention concerne également la poulie convexe elle-même, avec éventuellement ses caractéristiques optionnelles avantageuses décrites ci-après, dans la mesure où ladite poulie est destinée à être utilisée dans un dispositif anti-PMD pour fibre optique.

L'invention sera mieux comprise et d'autres particularités et avantages apparaîtront à l'aide de la description ci-après et des dessins joints, donnés à titre d'exemples, où :
- la figure 1 représente schématiquement une portion d'une chaîne de fibrage d'une fibre optique à partir d'une préforme ;
- les figures 2 à 4 représentent des diagrammes explicatifs de la réduction de PMD des fibres optiques dans le système anti-PMD selon l'art antérieur ;
- les figures 5 à 7 représentent des diagrammes explicatifs de la réduction de PMD des fibres optiques dans le système anti-PMD selon l'invention.

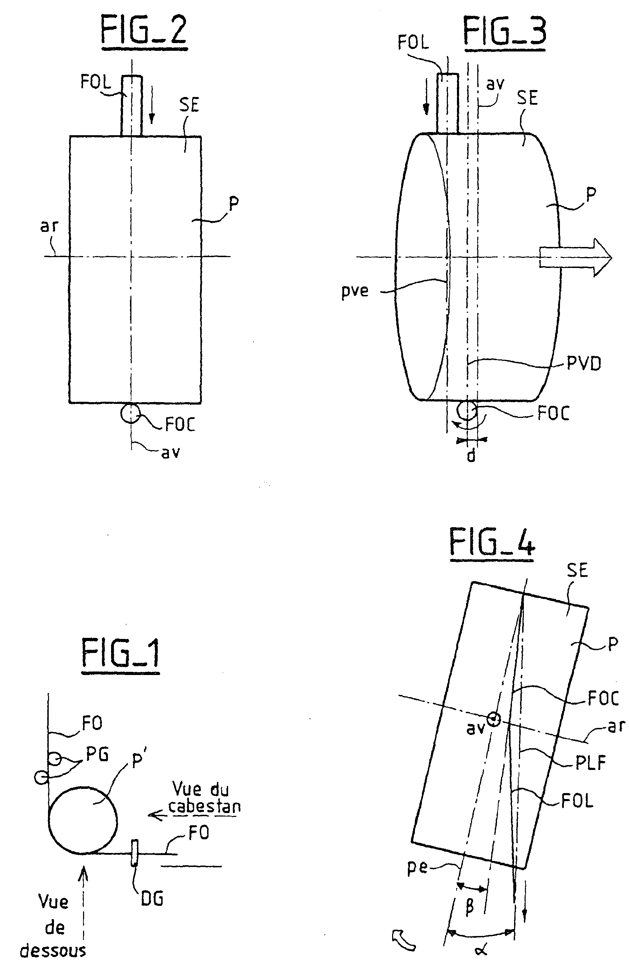

La figure 1 représente schématiquement une portion d'une chaîne de fibrage d'une fibre optique à partir d'une préforme, portion dans laquelle s'intègre le dispositif anti-PMD selon l'invention. La figure 1 représente la portion de chaîne de fibrage située au bas de la tour de fibrage. La fibre optique FO, déjà revêtue de ses deux revêtements, défile dans le sens des flèches pleines. Encore en mouvement vertical, la fibre optique FO est guidée par des poulies de guidage PG. Puis la fibre optique FO change de direction en passant sur la poulie oscillante P'. A la sortie de la poulie P' oscillante, la fibre optique FO est en mouvement horizontal et est guidée par des doigts de guidage DG. Le cabestan, non représenté sur la figure 1 pour des raisons de simplicité, est situé en aval des doigts de guidage DG. Des flèches pointillées montrent les différentes vues qui seront utilisées dans les figures suivantes.

Les différentes étapes de fabrication de la fibre optique lors du procédé de fibrage ont une influence importante sur les ovalités d'indice et de géométrie du coeur de la préforme et par conséquent de la fibre optique également, lesquelles ovalités sont l'une des causes d'une PMD importante. Or, les fibres optiques dont la PMD est trop importante ne peuvent pas être vendues car ladite PMD dégraderait de manière trop importante le signal optique transmis par ladite fibre optique. Lors du fibrage, la méthode utilisée pour réduire la PMD d'une fibre optique, consiste à faire tourner la fibre optique sur elle-même, alternativement dans un sens de rotation, par exemple le sens des aiguilles d'une montre, puis dans l'autre, par exemple le sens inverse à celui des aiguilles d'une montre. Le système anti-PMD, qui permet de vriller la fibre optique, situé à la base de la tour de fibrage, agit de préférence sur la fibre optique recouverte de ses deux revêtements. Le couple de torsion, appliqué à la fibre optique, est transmis jusqu'au cône de verre visqueux de la préforme, situé dans le four de fibrage, plusieurs mètres au-dessus du dispositif anti-PMD. Le verre « mou » et vrillé qui est tiré vers le bas de la tour de fibrage par la traction du cabestan, se refroidit ensuite rapidement (c'est ce que l'on appelle la « trempe du verre »), ce qui fige dans le verre, la torsion exercée par le système anti-PMD. Dans une limite raisonnable, plus la fibre optique est vrillée alternativement dans un sens puis dans l'autre, plus la PMD de ladite fibre optique optique sera faible et mieux ce sera. La PMD liée à l'ovalité d'indice (ovalité d'indice de coeur dans le plan perpendiculaire à l'axe de transmission de la lumière) peut être corrigée par la torsion de la fibre optique, comme pour l'ovalité géométrique. Par contre, une PMD qui serait liée à un défaut dans le verre, ou à une variation d'indice dans l'axe longitudinal de la fibre optique, ne serait pas modifiée par le dispositif anti-PMD.

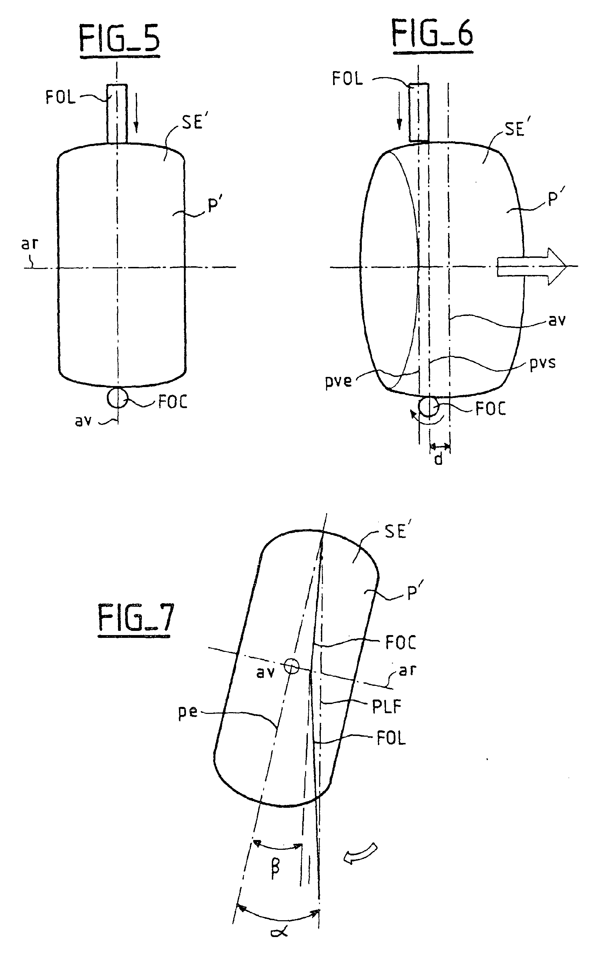

Les figures 2 à 4 représentent des diagrammes explicatifs de la réduction de PMD des fibres optiques dans le dispositif anti-PMD selon l'art antérieur. Les figures 5 à 7 représentent des diagrammes explicatifs de la réduction de PMD des fibres optiques dans le dispositif anti-PMD selon l'invention. Les figures 2, et 5 représentent des vues de profil de la poulie parallèle au plan de fibrage et vue depuis le cabestan. Les figures 3 et 6 représentent respectivement la poulie des figures 2 et 5 mais en oscillation et vue du cabestan. Les figures 4 et 7 représentent respectivement la poulie des figures 2 et 5 mais en oscillation et vue de dessous la poulie. Le sens de défilement de la fibre optique est indiqué par des flèches étroites droites. Le sens d'oscillation de la poulie est indiqué par des flèches larges. Le sens de roulement de la fibre optique sur la poulie est indiqué par des flèches étroites courbes. La poulie oscillante en rotation est notée poulie P lorsqu'elle est plate comme sur les figures 2 à 4 et P' lorsqu'elle est convexe comme sur les figures 5 à 7. La surface extérieure périphérique SE de la poulie plate P est cylindrique. La surface extérieure périphérique SE' de la poulie convexe P' est torique. La fibre optique est représentée par ses portions FOL libres de contact avec la poulie P ou P' et par ses portions FOC en contact avec la poulie P ou P'. La poulie P ou P' est en rotation autour de son axe ar de rotation. La poulie P ou P' est en oscillation autour de son axe vertical d'oscillation av. La perpendiculaire aux axes ar de rotation et ao d'oscillation est notée pe. Lors de l'oscillation de la poulie P ou P', la fibre optique en amont de la poulie P ou P' arrive sur la poulie P ou P' au niveau d'une position verticale d'entrée pve et quitte la poulie P ou P' au niveau d'une position verticale de sortie pvs. Le décalage horizontal entre la position verticale de sortie pvs et l'axe vertical av est noté décalage d. Le plan de fibrage est noté PLF. L'angle β est l'angle entre d'une part la perpendiculaire pe aux axes ar de rotation et av vertical d'oscillation et d'autre part la portion FOC de fibre optique en contact avec la poulie P ou P'. L'angle α est l'angle entre d'une part la perpendiculaire pe aux axes ar de rotation et av vertical d'oscillation et d'autre part le plan de fibrage PLF. L'angle α est représentatif de l'amplitude des oscillations de la poulie oscillante P ou P'. Le décalage d et l'angle β sont représentatifs de l'écart de la fibre optique à sa position d'équilibre, donc de l'effet des oscillations de la poulies P ou P' sur la fibre optique, donc de l'efficacité du traitement anti-PMD appliqué à la fibre optique par la poulie oscillante P ou P'. L'angle β de la poulie convexe P' de la figure 7 est substantiellement plus important que l'angle β de la poulie plate P de la figure 4.

La poulie P ou P' oscille autour de l'axe av vertical d'oscillation. En entrée de la poulie oscillante P ou P', la zone de contact entre la fibre optique et la poulie P ou P' n'intervient que très peu dans le couple de torsion exercé sur la fibre optique. L'action de la poulie oscillante P ou P' sur la fibre optique est localisée essentiellement entre le milieu de la zone de contact FOC entre la fibre optique et la poulie oscillante P ou P' d'une part et la sortie de la poulie oscillante P ou P' d'autre part. Pendant le fibrage, la poulie oscillante P ou P' tourne sur elle-même autour de son axe ar de rotation, car elle est entraînée par la fibre optique qui défile. Lorsque la poulie P ou P' oscille comme sur les figures 3 et 6, alors la poulie P ou P' exerce un couple de torsion sur la fibre optique. Ce couple de torsion assure la plus grande partie de la rotation de la fibre optique. Plus l'amplitude de l'oscillation de la poulie P ou P' est importante, plus le couple exercé par la poulie P ou P' est important, et plus la fibre optique tourne. En considérant le cas idéal où la fibre optique roule sans glissement sur la poulie P ou P', pour un angle α donné d'amplitude d'oscillation de la poulie P ou P', dans le cas de la poulie plate P, le décalage d et l'angle β restent relativement faibles tandis qu'ils deviennent substantiellement plus importants dans le cas de la poulie convexe P', car la fibre optique, n'étant plus au contact d'une surface plate mais d'une surface convexe, s'écarte plus facilement de sa position d'équilibre. A grande vitesse de fibrage, les résultats précédents restent valables mais l'explication en est plus complexe à cause des phénomènes de glissements et de vibrations de la fibre optique. Les phénomènes de glissement restent très limités, même à grande vitesse de fibrage. Ce sont surtout les phénomènes vibratoires qui deviennent importants.

Le dispositif anti-PMD selon l'invention n'est pas plus compliqué que le dispositif anti-PWM SZ de l'art antérieur qui est un appareil bien connu et bien maîtrisé ; seule la modification d'un seul élément, à savoir la poulie oscillante, permet de mettre en oeuvre le procédé selon l'invention et de nettement améliorer les résultats en termes de PMD de fibre optique obtenue. Il est aussi possible, pour une PMD de fibre optique obtenue équivalente grâce à un maintien de la valeur du couple de torsion appliqué à la fibre optique, de nettement diminuer l'angle d'oscillation de la poulie oscillante afin d'améliorer la qualité du revêtement de la fibre optique. Au contraire de ce qui aurait pu être redouté à priori, le caractère convexe de la poulie n'augmente pas significativement les défauts de revêtement de la fibre optique par rapport au cas d'une poulie plate. L'efficacité d'une poulie oscillante plate étant fonction croissante de son diamètre, on peut obtenir avec une poulie convexe de diamètre relativement plus faible les mêmes résultats en termes de PMD de fibre optique obtenue qu'avec une poulie plate de diamètre relativement plus important.

Des plages de valeurs préférentielles pour le rayon de la poulie et pour le rayon de courbure de sa convexité, permettant d'obtenir pour la fibre optique la PMD la plus basse possible vont maintenant être données. Soient R le rayon de la poulie et r le rayon de courbure de la partie convexe de la surface extérieure périphérique de la poulie.

De préférence, le rapport r/R est compris entre ½ et 1 . Dans le cas où le rayon R de la poulie est supérieur à 50mm et avantageusement dans le cas où l'amplitude des oscillation est également limité à quelques degrés de part et d'autre de la position verticale de la poulie, le rapport r/R peut aussi être compris entre ¼ et ½. En deçà d'un certain rayon r de courbure, le risque de déjanter pour la fibre optique n'est plus négligeable et des problèmes aussi bien de défaut de revêtement de la fibre optique que de défaut d'alignement de la poulie peuvent apparaître. Dans le cas où le rayon R de la poulie est inférieur à 50mm, le rapport r/R peut également être compris entre 1 et 2. Au-delà d'un certain rayon r de courbure, le gain d'une poulie convexe par rapport à une poulie plate devient de moins en moins intéressant.

De préférence, le rayon r de courbure de la partie convexe de la surface extérieure périphérique de la poulie est constant sur toute la partie convexe de la surface extérieure périphérique de la poulie, c'est-à-dire qu'une coupe de la poulie par un plan de symétrie passant par l'axe de rotation de la poulie donnerait une trace de la surface extérieure périphérique qui soit préférentiellement circulaire plutôt qu'elliptique ou conique ou autre. La poulie selon l'art antérieur était appelée plate car une coupe de la poulie par un plan de symétrie passant par l'axe de rotation de la poulie donnait une trace de la surface extérieure périphérique qui était rectiligne. De préférence, toute la surface extérieure périphérique de la poulie est convexe et pas seulement sa partie destinée à être au contact de la fibre optique.

De préférence, le rayon R de la poulie est inférieur ou égal à 100mm, car au-delà les poulies deviennent encombrantes et le gain en termes de PMD de fibre optique obtenue par rapport à la poulie plate moins intéressant. De préférence, le rayon R de la poulie est supérieur ou égal à 25mm afin d'éviter que la fibre optique ne déjante et quitte la surface extérieure périphérique de la poulie.

De plus, une poulie dont la surface extérieure périphérique est trop large ne présente que peu d'intérêt dans la mesure où une grande partie de la surface extérieure périphérique de ladite poulie n'est pas en contact avec la fibre optique et est donc inutile. La surface extérieure périphérique de la poulie est également de préférence la plus régulière et la plus lisse possible, en effet, des aspérités pourraient endommager le revêtement de la fibre optique.

Plus la poulie oscillante a un grand rayon R, et pour une même largeur de poulie oscillante, plus sa course est importante et plus le risque pour la fibre optique de déjanter est important. La poulie oscillante convexe selon l'invention permet l'utilisation d'une poulie de rayon plus faible pour un résultat équivalent en termes de PMD de fibre optique obtenue, ce qui permet alors de se passer de rebords de guidage sur la poulie convexe selon l'invention. De préférence, la poulie convexe selon l'invention ne comporte pas de rebords de guidage. Les oscillations de ladite poulie présentent avantageusement également une amplitude angulaire suffisamment faible pour que la fibre optique ne déjante pas de la poulie malgré l'absence de rebords de guidage sur la poulie.

Dans un exemple numérique, une poulie plate selon l'art antérieur de 76,5mm de rayon est comparée à une poulie convexe selon l'invention de même rayon et de rayon de courbure constant valant également 76,5mm. Des conditions d'oscillation identiques, exprimées en Hertz pour leur fréquence et en degrés pour leur amplitude, sont appliquées aux deux poulies. Le paramètre exprimé dans les cases du tableau suivant est la rotation de la fibre optique en tours par mètres qui est directement liée à la réduction de PMD obtenue (le plus élevé le nombre de tours par mètres pour la rotation, la plus faible la valeur de PMD obtenue ou bien plus précisément la plus grande proportion de préformes à géométrie de coeur hétérogène donnant toutefois de faibles valeurs de PMD dans une population donnée de préformes).

**Tableau**

| Conditions d'oscillation | Pour la poulie plate | Pour la poulie convexe |
|---|---|---|
| 4,5 Hz & +/- 4° | 0,2 | 2,6 |
| 4,5 Hz & +/- 6° | 3,0 | 6,7 |
| 4,5 Hz & +/- 8° | 6,4 | 11,9 |

L'amélioration due à la convexité de la surface extérieure périphérique de la poulie ressort clairement des valeurs de ce tableau.

## Revendications

1. Poulie (P, P') oscillante en rotation, la poulie appliquant, lors du fibrage d'une fibre optique (FO), alternativement dans le sens des aiguilles d'une montre et dans le sens inverse à celui des aiguilles d'une montre, un couple de torsion à la fibre optique de manière à diminuer sa dispersion modale de polarisation (PMD) **caractérisé en ce qu'**au moins la partie de la surface extérieure (SE') de la poulie destinée à être en contact avec la fibre optique pendant le fibrage est convexe.

2. Poulie selon la revendication 1, **caractérisé en ce que** soient R le rayon de la poulie et r le rayon de courbure de la partie convexe de la surface extérieure périphérique de la poulie, le rapport r/R est compris entre ¼ et 2.

3. Poulie selon la revenclicalion 2, **caractérise en ce que**, soient R le rayon de la poulie et r le rayon de courbure de la partie convexe de la surface extérieure périphérique de la poulie, le rapport r/R est compris entre ½ et 1.

4. Poulie selon la revendication 1, **caractérisé en ce que** R est compris entre 25 mm et 100 mm.

5. Poulie selon l'une quelconque des revendications 2 à 4 **caractérisé en ce que**, soient R le rayon de la poulie et r le rayon de courbure de la partie convexe de la surface extérieure périphérique de la poulie, R est supérieur à 50mm et le rapport r/R est compris entre ¼ et ½.

6. Poulie selon l'une quelconque des revendications 2 à 4, **caractérisé en ce que**, soient R le rayon de la poulie et r le rayon de courbure de la partie convexe de la surface extérieure périphérique de la poulie, R est inférieur à 50mm et le rapport r/R est compris entre 1 et 2.

7. Poulie selon l'une quelconque des revendications 2 à 6, **caractérisé en ce que** le rayon de courbure de la partie convexe de la surface extérieure périphérique (SE') de la poulie est constant sur toute la partie convexe de la surface extérieure périphérique de la poulie

8. Poulie selon l'une quelconque des revendications précédentes, **caractérisé en ce que** toute la surface extérieure périphérique (SE') de la poulie est convexe.

9. Poulie selon l'une quelconque des revendications précedentes, **caractérisé en ce que** le rayon de la poulie est inférieur ou égal à 100mm.

10. Poulie selon l'une quelconque des revendications précédentes, **caractérisé en ce que** le rayon de la poulie est supérieur ou égal à 25mm.

11. Poulie selon l'une quelconque des revendications précédentes, **caractérisé en ce que** la poulie ne comporte pas de rebords de guidage.

12. Dispositif pour diminuer ladispersion modale de polarisation (PMD) comprenant une poulie (P, P') oscillante en rotation, la poulie appliquant, lors du fibrage d'une fibre optique (FO), alternativement dans le sens des aiguilles d'une montre et dans sens inverse un couple de torsion à la fibre optique de manière à diminuer sa dispersion modale de polarisation (PMD), **caractérisé en ce que** ladite poulie est une poulie selon l'une quelconque des revendications 1 à 11.

## Claims

1. Oscillatory-rotation pulley (P, P'), the pulley applying, during drawing-out of an optical fibre (FO), alternately in the clockwise direction and in the anticlockwise direction, a torque to the optical fibre so as to reduce its polarisation mode dispersion (PMD), **characterised in that** at least that portion of the external surface (SE') of the pulley which is intended to be in contact with the optical fibre during drawing-out is convex.

2. Pulley according to claim 1, **characterised in that**, when R is the radius of the pulley and r is the radius of curvature of the convex portion of the external peripheral surface of the pulley, the ratio r/R is between ¼ and 2, inclusive.

3. Pulley according to claim 2, **characterised in that**, when R is the radius of the pulley and r is the radius of curvature of the convex portion of the external peripheral surface of the pulley, the ratio r/R is between ½ and 1, inclusive.

4. Pulley according to claim 1, **characterised in that** R is between 25 mm and 100 mm, inclusive.

5. Pulley according to any one of claims 2 to 4, **characterised in that**, when R is the radius of the pulley and r is the radius of curvature of the convex portion of the external peripheral surface of the pulley, R is greater than 50 mm and the ratio r/R is between ¼ and ½, inclusive.

6. Pulley according to any one of claims 2 to 4, **characterised in that**, when R is the radius of the pulley and r is the radius of curvature of the convex portion of the external peripheral surface of the pulley, R is less than 50 mm and the ratio r/R is between 1 and 2, inclusive.

7. Pulley according to any one of claims 2 to 6, **characterised in that** the radius of curvature of the convex portion of the external peripheral surface (SE') of the pulley is constant over the entire convex portion of the external peripheral surface of the pulley.

8. Pulley according to any one of the preceding claims, **characterised in** the entire external peripheral surface (SE') of the pulley is convex.

9. Pulley according to any one of the preceding claims, **characterised in that** the radius of the pulley is less than or equal to 100 mm.

10. Pulley according to any one of the preceding claims, **characterised in that** the radius of the pulley is greater than or equal to 25 mm.

11. Pulley according to any one of the preceding claims, **characterised in that** the pulley does not include guide flanges.

12. Device for reducing polarisation mode dispersion (PMD), comprising an oscillatory-rotation pulley (P, P'), the pulley applying, during drawing-out of an optical fibre (FO), alternately in the clockwise direction and in the opposite direction, a torque to the optical fibre so as to reduce its polarisation mode dispersion (PMD), **characterised in that** said pulley is a pulley according to any one of claims 1 to 11.

## Patentansprüche

1. Rolle (P, P'), welche sich in einer Drehschwingung befindet, wobei die Rolle während des Faserziehens einer optischen Faser (FO) abwechselnd im Uhrzeigersinn und gegen den Uhrzeigersinn ein Torsionsmoment auf die optische Faser ausübt, um ihre Polarisationsmodendispersion (PMD) zu verringern,
**dadurch gekennzeichnet,**
**dass** wenigstens der Abschnitt der äußeren Oberfläche (SE') der Rolle, welcher dazu bestimmt ist, während des Faserziehens im Kontakt mit der optischen Faser zu sein, konvex ist.

2. Rolle nach Anspruch 1,
**dadurch gekennzeichnet,**
**dass**, wenn R der Radius der Rolle und r der Krümmungsradius des konvexen Abschnitts der äußeren Umfangsfläche der Rolle ist, das Verhältnis r/R zwischen 1/4 und 2 enthalten ist.

3. Rolle nach Anspruch 2,
**dadurch gekennzeichnet,**
**dass**, wenn R der Radius der Rolle und r der Krümmungsradius des konvexen Abschnitts der äußeren Umfangsfläche der Rolle ist, das Verhältnis r/R zwischen 1/2 und 1 enthalten ist.

4. Rolle nach Anspruch 1,
**dadurch gekennzeichnet,**
**dass** R zwischen 25 mm und 100 mm enthalten ist.

5. Rolle nach einem der Ansprüche 2 bis 4,
**dadurch gekennzeichnet,**
**dass**, wenn R der Radius der Rolle und r der Krümmungsradius des konvexen Abschnitts der äußeren Umfangsfläche der Rolle ist, R größer als 50 mm ist und das Verhältnis r/R zwischen 1/4 und 1/2 enthalten ist.

6. Rolle nach einem der Ansprüche 2 bis 4,
**dadurch gekennzeichnet,**
**dass**, wenn R der Radius der Rolle und r der Krümmungsradius des konvexen Abschnitts der äußeren Umfangsfläche der Rolle ist, R kleiner als 50 mm ist und das Verhältnis r/R zwischen 1 und 2 enthalten ist.

7. Rolle nach einem der Ansprüche 2 bis 6,
**dadurch gekennzeichnet,**
**dass** der Krümmungsradius des konvexen Abschnitts der äußeren Umfangsfläche (SE') der Rolle über den gesamten konvexen Abschnitt der äußeren Umfangsfläche der Rolle konstant ist.

8. Rolle nach einem der vorhergehenden Ansprüche,
**dadurch gekennzeichnet,**
**dass** die gesamte äußere Umfangsfläche (SE') der Rolle konvex ist.

9. Rolle nach einem der vorhergehenden Ansprüche,
**dadurch gekennzeichnet,**
**dass** der Radius der Rolle kleiner oder gleich 100 mm ist.

10. Rolle nach einem der vorhergehenden Ansprüche,
**dadurch gekennzeichnet,**
**dass** der Radius der Rolle größer oder gleich 25 mm ist.

11. Rolle nach einem der vorhergehenden Ansprüche,
**dadurch gekennzeichnet,**
**dass** die Rolle keine Führungsränder umfasst.

12. Vorrichtung zum Verringern der Polarisationsmodendispersion (PMD), umfassend eine Rolle (P, P'), welche sich in einer Drehschwingung befindet, wobei die Rolle beim Faserziehen einer optischen Faser (FO) abwechselnd im Uhrzeigersinn und gegen den Uhrzeigersinn ein Torsionsmoment auf die optische Faser ausübt, um ihre Polarisationsmodendispersion (PMD) zu verringern,
**dadurch gekennzeichnet,**
**dass** die Rolle eine Rolle nach einem der Ansprüche 1 bis 11 ist.
